# EUROPEAN PATENT APPLICATION

(11) **EP 1 855 289 A1**
(43) Date of publication of application: **14.11.2007**
(21) Application number: 07251781.6
(22) Date of filing: 27.04.2007
(51) Int. Cl.: G11B 27/10, G11B 27/19

(54) **Content marking and playback**

(30) Priority: 11.05.2006 JP 2006132265
(71) Applicant: Sony Corporation, Tokyo (JP)
(72) Inventor: Sako, Yoichiro, Minato-ku Tokyo (JP); Terauchi, Toshiro, Minato-ku Tokyo (JP); Takehara, Mitsuru, Minato-ku Tokyo (JP)
(74) Representative: DeVile, Jonathan Mark

(57) **Abstract**

A content marking method includes the steps of, if a mark command issued by a user is detected when a content is being played back, determining, as a marked part, a part of the content including or close to a point designated by the mark command, and storing marked-part identifying information indicating the marked part or storing content data corresponding to the marked part of the content in a storage device.

## Description

### Field of the Invention

The present invention relates to content marking and playback. Embodiments of the invention relate to a method and apparatus for marking a part of each of contents such as music contents or video contents such that searching of the content to be played back can be easily performed according to marked parts.

### Background of the Invention

A large number of contents such as music contents and video contents are newly produced on a day-by-day basis and provided to users. Nowadays, storage media such as flash memory or hard disks with very high capacity are available. Using such a high-capacity storage medium disposed in a content playback apparatus such as a music playback apparatus, user is allowed to record a large number of contents and play back them at any time the user desires.

Various methods have been proposed for producers or providers of contents to indicate highlights of contents. Various methods have also been proposed for users to find a desired music or video content from a large number of contents.

Examples of the former technique may be found, for example, in Japanese Unexamined Patents Application Publication Nos. 2002-330411, 2003-162285, and 2003-50816. More specifically, Japanese Unexamined Patent Application Publication No. 2002-330411 discloses a technique in which at a sending end, a scene expected to be liked by a viewer is determined, and the scene is marked such that the scene can be extracted at a receiving end (by the viewer) according to marks. Japanese Unexamined Patent Application Publication No. 2003-162285 discloses a technique in which a content provider provides data indicating highlight or climax parts of recommended music contents. Japanese Unexamined Patent Application Publication No. 2003-50816 discloses a technique in which if a user inputs a title of an album, highlight parts of the album, determined by a music content provider, are sequentially played back on a track-by-track basis.

In a specific example of the latter technique described above, music contents are hierarchically classified in terms of genres, artist names, generations (such as 1970's, 1980's, 1990's, etc.), etc. A user is allowed to specify categories in respective hierarchical category levels, thereby to finally select a music content. In another proposed technique, a list of recommended music contents selected based on a user's playback log is presented to a user so that the user is allowed to select a music content from the list.

### Summary of Invention

Various respective aspects and features of the invention are defined in the appended claims. Features from the dependent claims may be combined with features of the independent claims as appropriate and not merely as explicitly set out in the claims.

In the techniques disclosed in Japanese Unexamined Patents Application Publication Nos. 2002-330411, 2003-162285, and 2003-50816, content producers or content providers determine climax or highlight scenes/parts of video or music contents. However, the climax or highlight parts determined by content producers or content provider are not necessarily accepted by all users, because preferences vary from user to user. A user may like a particular part, but another user may like a different part.

On the other hand, in the technique in which a user specifies hierarchical categories and finally selects a music content, a complicated operation is needed to select contents. Besides, it is difficult for the user to determine whether the content is good or bad for the user until the user actually listens to the music content. That is, there is a possibility that the user does not like the selected music content. If recommended music contents are selected according to a user's playback log, and a list of recommended music contents is presented to a user, then the user is allowed to easily select a music content from the list. However, still in this case, a music content the user wants to listen to cannot be necessarily found in the list of recommended music contents.

In view of the above, embodiments of the present invention seek to provide a technique to allow each user to scan favorite music or video contents to quickly find a content the user wants to listen to or view at a time the user desires.

More particularly, according to an embodiment of the present invention, there is provided a content marking method including the steps of, if a mark command issued by a user is detected when a content is being played back, determining, as a marked part, a part of the content including or close to a point designated by the mark command, and storing marked-part identifying information indicating the marked part or content data corresponding to the marked part of the content into a storage device.

According to an embodiment of the present invention, there is provided a content playback method including the step of sequentially playing back marked parts of respective contents, each marked part being set so as to include a point designated by a mark command issued by a user for each content or so as to be located close to the designated point.

In the content marking method described above, for example, when a content such as a music content is being played back, if a user finds a part which attracts the user very much, the user inputs a mark command to a content playback apparatus, for example, by pressing a particular key or the like. In response, the control unit of the content playback apparatus marks a part of the music content close to a point designated by the mark command, and stores marked-part identifying information indicating the marked part or stores content data corresponding to the marked part of the content in the storage device.

In the content playback method described above, marked parts of respective contents determined in accordance with the mark command issued by the user by using the content marking method described above are sequentially played back.

Thus, each user is allowed to scan favorite music or video contents to quickly find a content the user wants to listen to or view at a time the user desires. More specifically, when a marked part of a music content is being played back, if the user selects the music content by pressing a particular key or the like, then the selected music content is played back from its beginning.

### Brief Description of the Drawings

The invention will now be described by way of example with reference to the accompanying drawings, throughout which like parts are referred to by like references, and in which:
Fig. 1 is a diagram showing a content playback apparatus according to an embodiment of the present invention;
Fig. 2 shows a functional configuration, associated with functions of marking contents and searching for contents, of a content playback apparatus according to an embodiment of the present invention;
Fig. 3 is a diagram showing an example of a manner in which a particular part of a music content is marked in accordance with a mark command;
Fig. 4 is a diagram showing an example of a manner in which a start point and an end point of a marked part are set at pulses or measures of music;
Fig. 5 is a diagram showing an example of a manner in which a particular part of a music content is marked in accordance with a mark command;
Fig. 6 is a flow chart showing a marking process according to an embodiment of the present invention; and
Fig. 7 is a flow chart showing a search-and-play process according to an embodiment of the present invention.

### Description of the Example Embodiments

### Example of System

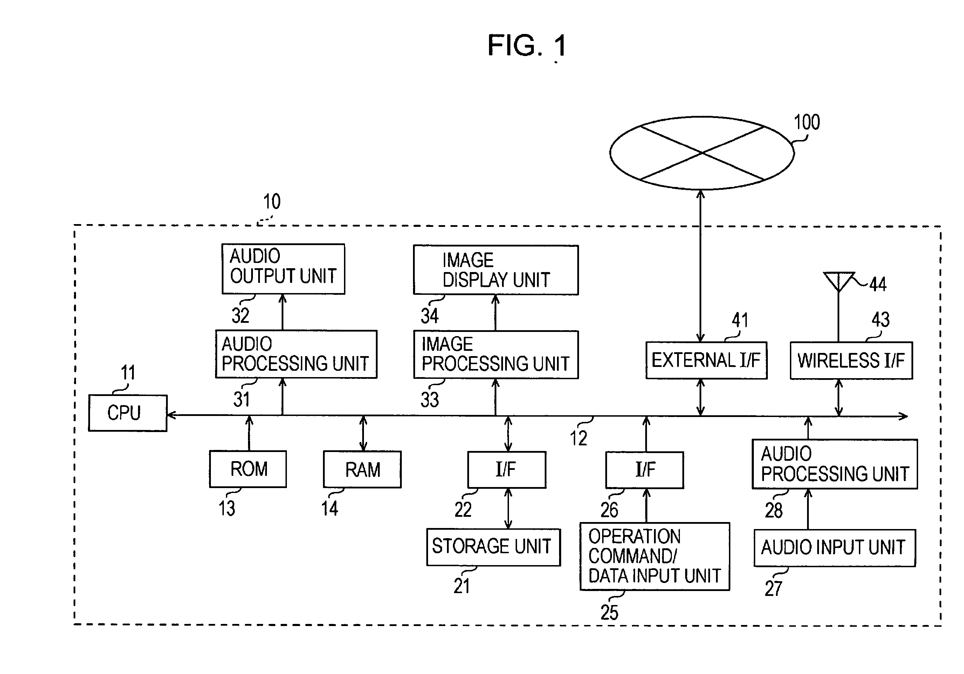

Referring to Fig. 1, an example of a content marking method and an example of a content playback apparatus according to an embodiment of the present invention are described below.

In this example, the content playback apparatus 10 is configured to play back music contents and video contents.

More specifically, the content playback apparatus 10 includes a CPU 11 which is connected, via a bus 12, to a ROM 13 and a RAM 14. In the ROM 13, programs including a content marking program and a content search program and associated data are stored. In the RAM 14, programs and data are loaded.

The bus 12 is also connected to a storage unit 21 via an interface 22, an operation command/data input unit 25 via an interface 26, and an audio input unit 27 via an audio processing unit 28.

The storage unit 21 may be a semiconductor memory or a hard disk drive disposed in the content playback apparatus 10, or the storage unit 21 may be an optical disk or a memory card mounted on the content playback apparatus 10. Content data and marked-part identifying information are stored in the storage unit 21 as described later in detail.

The operation command/data input unit 25 is used by a user to input a command such as a mark command or data. The audio input unit 27 is a microphone adapted to detect a voice uttered by a user to specify a part to be marked. The audio processing unit 28 converts an analog voice signal supplied from the audio input unit 27 into voice data. The voice data may be compressed as required.

The bus 12 is also connected to an audio output unit 32 via an audio processing unit 31 and a image display unit 34 via a video processing unit 33.

The audio processing unit 31 converts the audio data such as music data into an analog form. In this conversion process, decompression is performed if necessary. The audio output unit 32 is a speaker or a headphone. The video processing unit 33 converts video data (image data) into an analog video signal (image signal). In the conversion process, decompression is performed if necessary. The image display unit 34 may be a liquid crystal display or the like.

The bus 12 is also connected to an external interface 41 for connection to the Internet 100 and also connected to an antenna 44 via a wireless interface 43. However, in a case where it is not necessary to transmit/receive data to/from an external server or other external terminal via the Internet 100 or a wireless network, the external interface 41, the wireless interface 43, and the antenna 44 are not necessary.

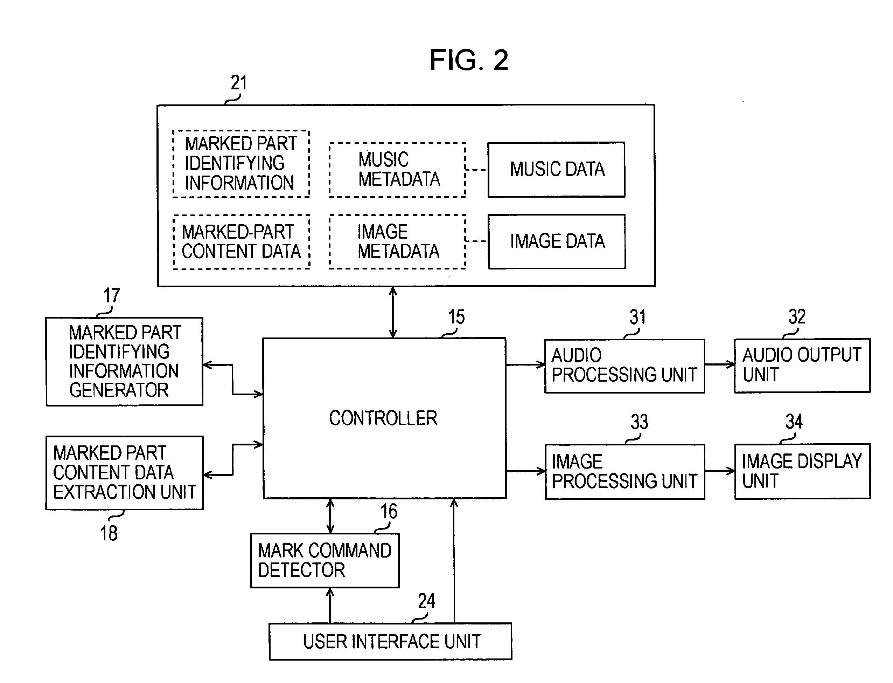

Fig. 2 shows a functional configuration, associated with functions of marking contents and searching for contents, of the content playback apparatus 10.

In Fig. 2, a controller 15 is implemented by the CPU 11, the ROM 13, and the RAM 14. The controller 15 controls various units in the content playback apparatus 10 and performs a marking process and a search-and-play process as described later.

The mark command detector 16 is implemented by the CPU 11, the ROM 13, and the RAM 14 so as to be capable of detecting a mark command issued by a user.

In the example shown in Fig. 1, a user interface unit 24 is realized by the operation command/data input unit 25 and the audio input unit 27.

The marked-part identifying information generator 17 is implemented by the CPU 11, the ROM 13, and the RAM 14 so as to be capable of producing marked-part identifying information indicating a marked part when the mark command detector 16 detects the mark command issued by a user and the controller 15 determines the part to be marked.

The marked-part content data extracting unit 18 is implemented by the CPU 11, the ROM 13, and the RAM 14 so as to be capable of extracting marked parts of content data (not entire content data but only marked parts of content data) for use in the content search process.

In the present embodiment, a plurality of music content data and a plurality of video content data which may be marked are stored in the storage unit 21 of the content playback apparatus 10. Each music content data has metadata indicating a music title, an artist name, a music genre, associated image, etc. Each video content data has metadata indicating a video tile, a producer name, names of performers, a video genre, associated audio data, etc.

The marked-part identifying information produced by the marked-part identifying information generator 17 is stored in association with a corresponding content in the storage unit 21 under the control of the controller 15.

In a case where in the marking process, the marked-part content data extracting unit 18 extracts content data corresponding to the marked part of the content, the extracted content data corresponding to the marked part is recorded, in association with the content and separately from the entire content data, in the storage unit 21 under the control of the controller 15.

### Marking Method and Searching Method

### Marking Method

When a user wants to mark a part of a content, the user operates the content playback apparatus 10 to play back the content. When the content is being played back, if the user finds a part the user likes and thus wants to listen to or view again later, the user issues the mark command, for example, by pressing a mark key on the content playback apparatus 10.

### Marking Process for Music Contents

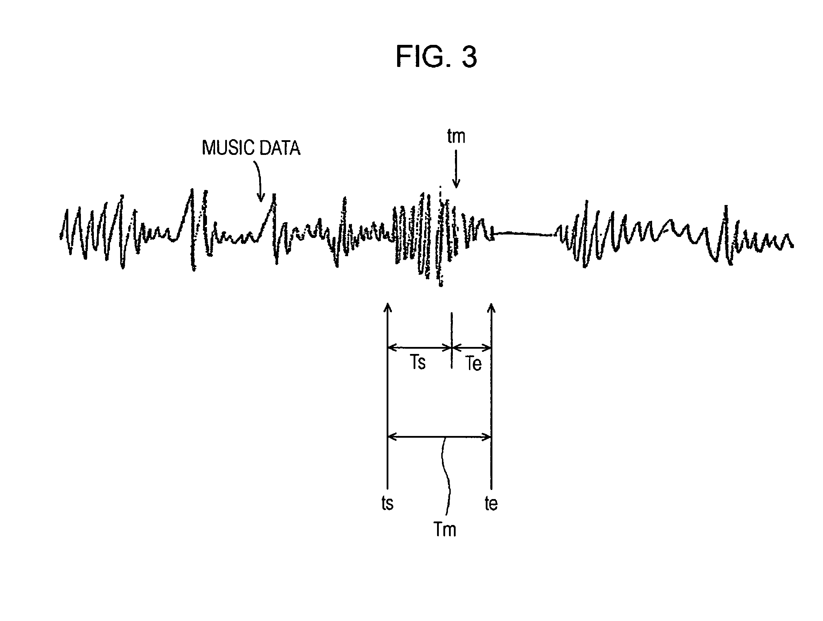

Fig. 3 shows an example of a manner in which a particular part of a music content is marked in response to a mark command issued by a user during the operation of playing back the music content. In Fig. 3, music data is shown in the form of a waveform of an analog audio signal (music signal).

It is assumed that the mark command is detected at a time tm by the mark command detector 16. In response, the controller 15 determines a part of the music content including or close to the point specified by the mark command, as a marked part of the music content.

More specifically, a part immediately following the time tm may be employed as the marked part. However, in practice, there can be some time delay in actually pressing the mark key after the user decides to press the mark key. Taking this into account, it is desirable that the marked part be determined to include the time tm such that the start point of the marked part is set at a point corresponding to a time ts which is Ts before the time tm, and the end point of the marked part is set at a point corresponding to time te which is Te after the time tm. The time periods Ts and Te may be determined such that Ts > Te or Ts = Te or otherwise Ts < Te.

The length Tm of the marked part has an influence on the music content search operation described below. The shorter the length Tm, the music content search can be performed in a shorter period. However, if the length Tm is too short, it becomes difficult for users to easily identify music contents. Thus, it is desirable that the length Tm is set in the range from 1 or 2 seconds to 10 or few ten seconds.

The ability to identify music contents depends on users. Thus, the content playback apparatus 10 may be configured such that a user is allowed to set the marked-part length Tm to a particular value such as 3 second, 5 seconds, etc.

It is also desirable that the start point ts and the end point te of the marked period Tm be set at pulses or measures of music.

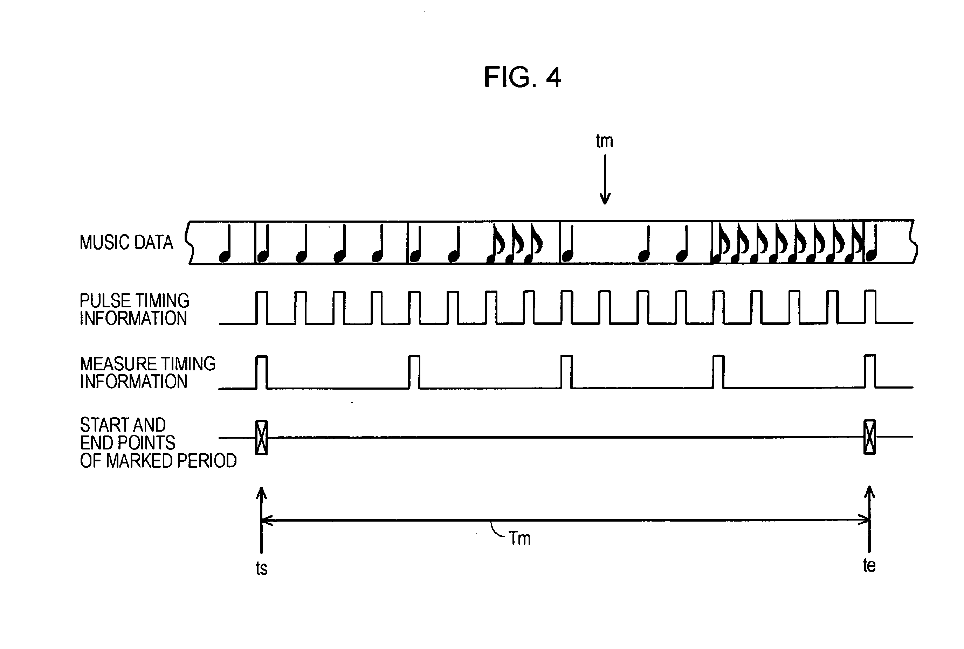

In a case where pulse timing information (indicating pulse timings) is recorded for each music content data in the storage unit 21 as shown in Fig. 4, it is possible to easily set the start point and end point of the marked period at pulses in accordance with the pulse timing information during the playback operation.

In a case where measure timing information (indicating measure timings) is recorded for each music content data in the storage unit 21 as shown in Fig. 4, it is possible to easily set the start point and end point of the marked period at measure start points in accordance with the measure timing information during the playback operation.

Even in a case where neither pulse timing information nor measure timing information is recorded in the storage unit 21, it is possible to set the start point and the end point of the marked period at pulses or measures by detecting pulses or measures by analyzing the music data in the playback operation.

For example, when music data is acquired from a server via a communication network and the acquired music data is played back, pulse timing information or measure timing information may be transmitted together with the music data from the server to the content playback apparatus 10 such that a start point and an end point of a marked period can be easily set at pulses or measures.

It is more desirable to set a start point and an end point of a marked period at measures than at pulses.

The mark command may be issued by a user, for example, by pressing the mark key and holding it in the pressed position for a predetermined period or longer. Alternatively, the mark command may be issued by pressing the mark key twice in a short time.

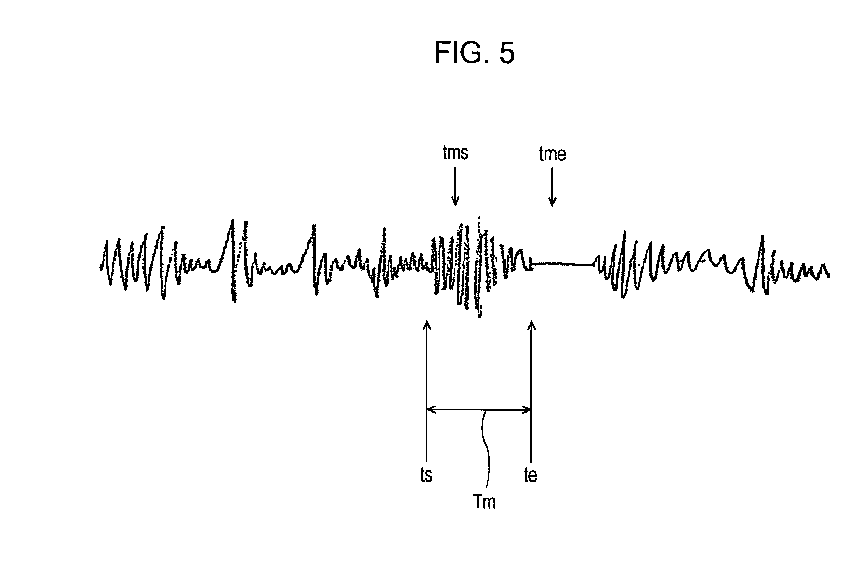

Fig. 5 shows an example of a manner in which the mark command is issued by pressing the mark key twice in a short time. In Fig. 5, pressing of the mark key is detected at a time tms, and releasing of the mark key is detected at a time tme.

In this case, the controller 15 sets the marked part so as to have a marked period Tm starting at a time ts slightly before the time tms and ending at a time te slightly before the time tme.

Also in this case, it is desirable to set the start point ts and the end point te of the marked period Tm at pulses or measures of music.

After the marked part has been determined in the above-described manner, the marked-part identifying information generator 17 produces marked-part identifying information indicating the marked part, for example, in such a manner that (a) from a time S seconds after the start of music to a time E seconds after the start of music, (b) from an S-th frame to an E-th frame of music data of the music content, (c) from an S-th pulse to an E-th pulse of the music, or (d) from an S-th measure to an E-th measure of the music.

The controller 15 stores the produced marked-part identifying information in association with the corresponding music in the storage unit 21 such that it is possible to identify which one of music contents the marked-part identifying information is associated with.

When marking is performed, instead of producing and storing such marked-part identifying information, the controller 15 may extract, using the marked-part content data extracting unit 18, music content data corresponding to the marked part (that is, not entire music data but only music data corresponding to the marked part), and the controller 15 may record the extracted music data corresponding to the marked part in association with the corresponding music content in the storage unit 21 such that it is possible to identify which one of the music contents the extracted music data corresponds to. In this case, it is not necessary to extract the music data corresponding to the marked part in the music content search operation.

### Marking Process for Video Contents

Contents other than music contents can be marked in a similar manner.

More specifically, for video contents including moving images (animation images, game images, etc.), sequence of still images to be played back sequentially, electronic books (electronic documents), etc., which can be displayed on the image display unit 34 so that a user can visually view the displayed contents, marking may be performed as follows.

In a case where a video content is a moving image, it is desirable to set a start point and an end point of a marked part at a start or end of a scene or a cut of the moving image. For example, in a case where when a scene is being displayed on the image display unit 34, if a user issues a mark command, then a marked part is set such that the marked part starts at the start of this scene and ends at the end of this scene.

When the video content is a sequence of still images to be played back sequentially, a start point and an end point of a marked part are set at boundaries between adjacent still images. For example, when a still image is being displayed on the image display unit 34, if the mark command is issued by a user, then a marked part is set such that (p) only the current still image is marked, (q) the current still image and an immediately previous still image are marked, (r) the current still image and an immediately following still image are marked, or (s) the current still image, an immediately previous still image, and an immediately following image area marked.

When the video content is an electronic book (electronic document) configured such that a page displayed on the image display unit 34 is switched in response to a page change command issued by a user or is automatically switched by the controller 15 of the content playback apparatus 10, if a user issues a mark command when a certain page is being displayed on the image display unit 34, then a mark part is determined, for example, such that (t) only the current page is marked, (u) the current page and a previous page are marked, (v) the current page and a following page are marked, or (w) the current page, a previous page, and a following page are marked.

Also for such a video content, marked-part identifying information is produced in a similar manner to music content and stored in the storage unit 21, or video data corresponding to the marked part is extracted and stored in the storage unit 21.

### Examples of Marking Process

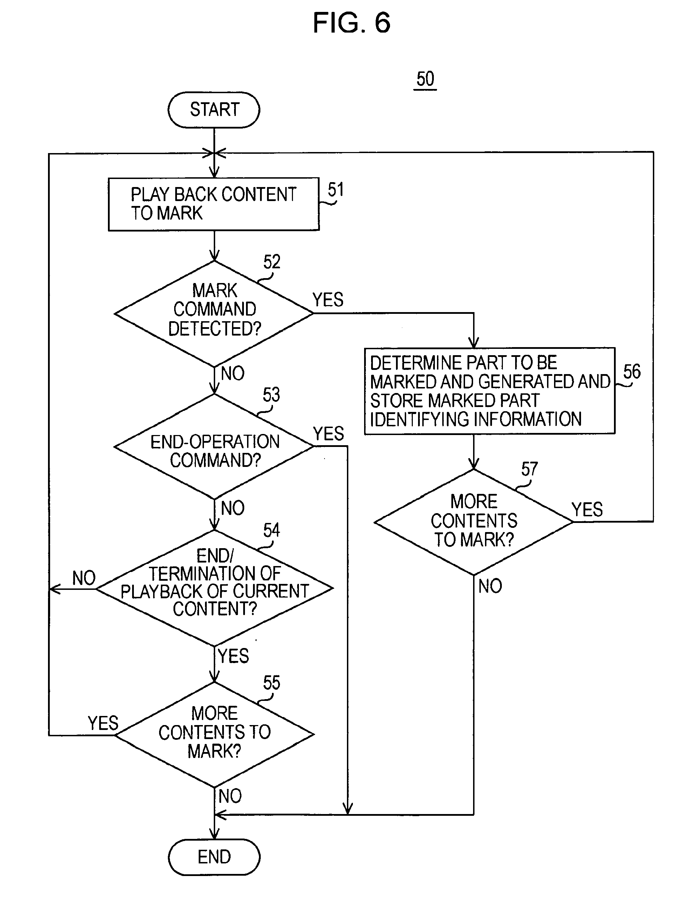

Referring to Fig. 6, an example of the marking process mainly performed by the controller 15 of the content playback apparatus 10 is described below.

In this specific example of the marking process 50, first, in step 51, playback of a content to be marked is started. Next, in step 52, a determination is made as to whether a mark command issued by a user has been detected.

If the mark command has not been detected, the process proceeds from step 52 to step 53. In step 53, a determination is made as to whether to end the marking process. For example, if the power of the content playback apparatus 10 is turned off or if the user performs an operation to end the playback of the content, the marking process is ended. If not so, the process proceeds from step 53 to step 54. In step 54, a determination is made as to whether to end the playback of the current content.

In a case where the end of the current content has not yet been reached in the playback operation, and a command to play back a next command has not been issued by the user, the process returns from step 54 to step 51 to continue the playback of the current content.

If the playback of the entire current content is completed, or if a command to play back a next content is issued by the user, the process proceeds from step 54 to step 55. In step 55, a determination is made as to whether there is a next content to be marked. If so, the process returns from step 55 to step 51 to start playback of the next content to be marked However, if there is no more content to be marked, the marking process is ended.

On the other hand, if it is determined in step 52 that the mark command has been detected, the process proceeds to step 56. In step 56, a part to be marked is determined, marked-part identifying information indicating the part to be marked is produced, and the produced marked-part identifying information is stored in the storage unit 21. The process then proceeds to step 57. In step 57, a determination is made as to whether there is a next content to be marked. If there is a next content to be marked, the process proceeds to step 51 and playback of the next content to be marked is started. However, if there is no more content to be marked, the marking process is ended.

### Searching Method

In a state in which part or all of contents recorded in the storage unit 21 have been marked in the above-described manner, searching may be performed as follows.

For example, when a user plays back a music content on the content playback apparatus 10, the user may search for the music content. To this end, the user first issues a playback command .

In response, the controller 15 of the content playback apparatus 10 sequentially selects marked music contents from the contents recorded in the storage unit 21.

If the controller 15 determines that music data of a marked part of a currently selected music content was extracted during the marking process and stored in the storage unit 21, the controller 15 reads the music data of the marked part of the content from the storage unit 21 and supplies it to the audio processing unit 31. However, if the music data of the marked part of the currently selected content has not been extracted and not stored, the controller 15 extracts, using the marked-part content data extracting unit 18, the marked part of the music data from the total music data recorded in the storage unit 21 in accordance with the marked-part identifying information stored in the storage unit 21, and the controller 15 supplies the extracted data to the audio processing unit 31.

Thus, the marked parts of music contents are played back sequentially, and the user is allowed to quickly find a desired music content.

If the user issues a play-all command during the operation of playing back a marked part of a music content, the controller 15 plays back the entirety of this music content from its beginning in accordance with the music data recorded in the storage unit 21.

Thus, the user is allowed to easily find a desired music content which may vary from time to time and enjoy listening to it from its beginning.

Note that video contents can be searched for in a similar manner.

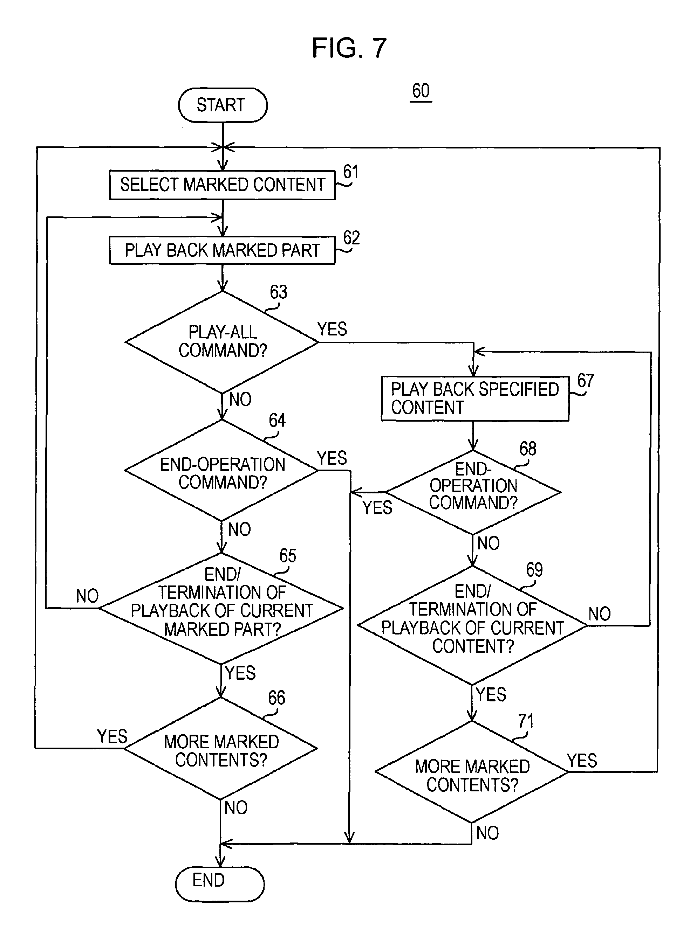

Fig. 7 shows an example of a search-and-play process mainly performed by the controller 15 of the content playback apparatus 10 in accordance with the method described above.

In this search-and-play process, first, in step 61, a marked content is selected. Next, in step 62, playback of a marked part of the selected content is started as described above. Next, in step 63, a determination is made as to whether a user has issued a command to play back the entirety of the current content.

If the command to play back the entirety of the current content is not detected, the process proceeds from step 63 to step 64. In step 64, a determination is made as to whether to end the search-and-play process. For example, when the power of the content playback apparatus 10 is turned off or when an end command issued by the user is detected, the search-and-play process is ended. If not so, the process proceeds from step 64 to step 65. In step S65, a further determination is made as to whether end the playback of the current marked part.

If the end of the marked part has not been reached in the playback operation and if the command to play back a marked part of a next content has not been issued by a user, the process returns from step 65 to step 62 to continue the playback of the current marked part.

If the end of the current marked part has been reached, or if the command to play back a marked part of a next content is issued by the user, the process proceeds from step 65 to step 66. In step 66, a determination is made as to whether there is a marked content. If there is no more marked content, the search-and-play process is ended. However, if there are more marked contents, the process proceeds from step 66 to step 61 to select a next marked content.

On the other hand, if it is determined in step 63 that the command to play back the entire content has been issued, the process proceeds to step 67. In step 67, the content is played back from its beginning. In step 68, a determination is made as to whether to end the search-and-play process. For example, if the power of the content playback apparatus 10 is turned off, or if the user performs an operation to end the search-and-play operation, the search-and-play process is ended. If not so, the process proceeds from step 68 to step 69. In step 69, a determination is made as to whether to end the playback of the current content.

If the end of the current content has not been reached in the playback operation and if the command to play back a marked part of a next content has not been issued by a user, the process returns from step 69 to step 67 to continue the playback of the current content.

If the playback of the entire current content is completed, or if the command to play back a marked part of a next content is issued by the user, the process proceeds from step 69 to step 71. In step 71, a determination is made as to whether there are more marked contents. If there is no more marked content, the search-and-play process is ended. However, if there are more marked contents, the process returns from step 71 to step 61 to select a next marked content.

In the above-described process, when the command to play back the entire content is issued by the user during the operation of playing back the marked part of the content, not only the current content but all contents belonging to the same content genre or the content list as that the current content belongs to may be played back.

When there are a large number of marked music contents, it can take a long time to find a desired music content even when the above-described searching method is used. For example, when there are 1000 marked music contents, even if the length of each marked part is as short as 1 to 2 seconds, it takes 1000 to 2000 seconds to find a desired music content in the longest case.

To avoid the above problem, in the case where a large number of music contents are recorded in the storage unit 21, a user may be allowed to specify a category in terms of a music genre, an artist name, a music tempo (such as slow tempo, middle tempo, or a fast tempo), a released year, or a music content list (play list) to limit music contents to be scanned to particular ones. In this case, the controller 15 of the content playback apparatus 10 sequentially plays back marked parts of the music contents belonging to the specified category.

A user may specify a representative music content for each category such as a music content list, and the user may mark only a particular part of the representative music content. In this case, in the searching operation, marked of parts of respective categories may be played back sequentially.

When a marked part of a music content of a particular category is being played back, if the play-all command is issued by the user, only the current representative content may be played back from its beginning or all music contents belonging to the current category may be played back.

In the embodiments described above, the content marking program and the content search program are stored in the ROM 13 of the content playback apparatus 10. Alternatively, these programs may be provided in the form of a storage medium on which the programs are stored, the programs may be loaded into the RAM 14 from the storage medium, and the programs loaded in the RAM 14 may be executed. Still alternatively, the content playback apparatus 10 may acquire the programs via a network.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A content marking method comprising the steps of:
if a mark command issued by a user is detected when a content is being played back, determining, as a marked part, a part of the content including or close to a point designated by the mark command, and
storing marked-part identifying information indicating the marked part or storing content data corresponding to the marked part of the content in a storage device.

2. The content marking method according to Claim 1, wherein the start point of the marked part is set at a point before the point designated by the mark command, and the end point of the marked part is set at a point after the point designated by the mark command.

3. The content marking method according to Claim 1, wherein
the mark command is given over a particular period or is issued twice, and
the start point of the marked part is at or close to the point designated by the start of the mark command or designated by a first mark command, and the end point of the marked part is at or close to the point designated by the end of the mark command or designated by a second mark command .

4. The content marking method according to Claim 1, wherein
the content is a music content, and
the start and end points of the marked part are set at pulses or measures of music.

5. The content marking method according to Claim 1, wherein
the content is a moving image content, and
the start and end points of the marked part are set at boundaries of a scene or a cut.

6. A content playback apparatus comprising:
playback means for playing back a content in accordance with content data;
detection means for detecting a mark command issued by a user; and
control means for, if the mark command issued by the user is detected by the detection means when the content is being played back by the playback means, determining, as a marked part, a part of the content including or close to a point designated by the mark command, and storing marked-part identifying information indicating the marked part or storing content data corresponding to the marked part of the content into a storage device.

7. The content playback apparatus according to Claim 6, wherein
the control means determines the start and end points of the marked part such that the start point of the marked part is set at a point before the point designated by the mark command, and the end point of the marked part is set at a point after the point designated by the mark command.

8. The content playback apparatus according to Claim 6, wherein
the mark command is given over a particular period or is issued twice, and
the control means determines the start and end points of the marked part such that the start point of the marked part is at or close to the point designated by the start of the mark command or designated by a first mark command, and the end point of the marked part is at or close to the point designated by the end of the mark command or designated by a second mark command.

9. The content playback apparatus according to Claim 6, wherein
the content is a music content, and
the control means determines the start and end points of the marked part such that the start and end points of the marked part are set at pulses or measures of music.

10. The content playback apparatus according to Claim 6, wherein
the content is a moving image content, and
the control means determines the start and end points of the marked part such that the start and end points of the marked part are set at boundaries of a scene or a cut.

11. The content playback apparatus according to Claim 6, further comprising storage means for storing the content data,
wherein the playback means plays back the content in accordance with the content data read from the storage means.

12. The content playback apparatus according to Claim 6, further comprising communication means for receiving content data transmitted from a server connected to the communication means via a communication network,
wherein the playback means plays back the content in accordance with the content data acquired by the communication means.

13. A content playback method comprising the step of sequentially playing back marked parts of respective contents, each marked part being set so as to include a point designated by a mark command issued by a user for each content or so as to be located close to the designated point.

14. The content playback method according to Claim 13, wherein
the start point of the marked part of each content is set at a point before the point designated by the mark command, and the end point of the marked part of each content is set at a point after the point designated by the mark command.

15. The content playback method according to Claim 13, wherein
the mark command is given over a particular period or is issued twice, and
the start point of the marked part of each content is at or close to the point designated by the start of the mark command or designated by a first mark command, and the end point of the marked part of each content is at or close to the point designated by the end of the mark command or designated by a second mark command.

16. The content playback method according to Claim 13, wherein
each content is a music content, and
the start and end points of the marked part of each content are set at pulses or measures of music.

17. The content playback method according to Claim 13, wherein
each content is a moving image content, and
the start and end points of the marked part of each content are set at boundaries of a scene or a cut.

18. The content playback method according to Claim 13, wherein
if a user issues a selection command when a marked part of a content is being played back, the content is played back from its beginning

19. A content playback apparatus comprising:
playback means for playing back a content in accordance with content data; and
control means for controlling the playback means so as to sequentially play back marked parts of respective contents, each marked part being set so as to include a point designated by a mark command issued by a user for each content or so as to be located close to the designated point.

20. The content playback apparatus according to Claim 19, wherein the start point of the marked part of each content is set at a point before the point designated by the mark command, and the end point of the marked part of each content is set at a point after the point designated by the mark command.

21. The content playback apparatus according to Claim 19, wherein
the mark command is given over a particular period or is issued twice, and
the start point of the marked part of each content is at or close to the point designated by the start of the mark command or designated by a first mark command, and the end point of the marked part of each content is at or close to the point designated by the end of the mark command or designated by a second mark command.

22. The content playback apparatus according to Claim 19, wherein
each content is a music content, and
the start and end points of the marked part of each content are set at pulses or measures of music.

23. The content playback apparatus according to Claim 19, wherein
each content is a moving image content, and
the start and end points of the marked part of each content are set at boundaries of a scene or a cut.

24. The content playback apparatus according to Claim 19, wherein
the control means controls the content playback apparatus such that if a user issues a selection command when a marked part of a content is being played back, the content is played back from its beginning.

25. A storage medium on which a content marking program is stored, the content marking program being executable by a computer to mark a part of a content, the execution of the content marking program allowing the computer to function as:
detection means for detecting a mark command issued by a user when a content is being played back; and
means for determining, as a marked part, a part of the content including or close to a point designated by the mark command, and storing marked-part identifying information indicating the marked part or content data corresponding to the marked part of the content into a storage device.

26. A storage medium on which a content search program is stored, the content search program being executable by a computer to search for a content, the execution of the content search program allowing the computer to function as:
means for sequentially playing back marked parts of respective contents, each marked part being set so as to include a point designated by a mark command issued by a user for each content or so as to be located close to the designated point.

27. A content playback apparatus comprising:
a playback unit adapted to play back a content in accordance with content data;
a detection unit adapted to detect a mark command issued by a user; and
a control unit adapted to, if the mark command issued by the user is detected by the detection means when the content is being played back by the playback means, determining, as a marked part, a part of the content including or close to a point designated by the mark command, and storing marked-part identifying information indicating the marked part or storing content data corresponding to the marked part of the content into a storage device.

28. A content playback apparatus comprising:
a playback unit adapted to play back a content in accordance with content data; and
a control unit adapted to control the playback unit so as to sequentially play back marked parts of respective contents, each marked part being set so as to include a point designated by a mark command issued by a user for each content or so as to be located close to the designated point.
